# EUROPEAN PATENT SPECIFICATION

(11) **EP 4 498 840 B1**
(45) Date of publication and mention of the grant of the patent: **11.02.2026**
(21) Application number: 23717657.3
(22) Date of filing: 28.03.2023
(51) Int. Cl.: A23N 1/00, A47J 19/02, A23N 1/02

(54) **DEVICE AND METHOD FOR SQUEEZING JUICE FROM FRUITS**
VORRICHTUNG UND VERFAHREN ZUM AUSPRESSEN VON FRUCHTSAFT
DISPOSITIF ET PROCÉDÉ POUR EXPRIMER LE JUS DE FRUITS

(30) Priority: 29.03.2022 BE 202205225
(43) Date of publication of application: 05.02.2025
(73) Proprietor: TENRIT Foodtec Maschinenbau GmbH, 33758 Schloß Holte-Stukenbrock (DE)
(72) Inventor: DECRAMER, Willem, 3900 Pelt (BE); DE HERDT, Amaury, 3900 Pelt (BE); DE HERDT, Harold, 3900 Pelt (BE); LINKENS, Nicolas, 3900 Pelt (BE); THUWIS, Glenn, 3900 Pelt (BE)
(74) Representative: Brinkmann & Partner
(86) International application number: PCT/IB2023/053055
(87) International publication number: WO 2023/187631

(56) References cited:
- CN-A- 108 324 078
- US-A- 4 924 770
- US-A1- 2018 325 158

## Description

### Technical domain

The present invention relates to a device for squeezing juice from fruits wherein the device comprises: a reservoir for the fruits. a squeezing system for squeezing the juice from the fruits, a conveyor system for conveying the fruits from the reservoir to the squeezing system; a discharge system for discharging the juice from the squeezing system to a vessel having a predetermined filling volume, wherein the discharge system is arranged for the placement and removal of the vessel into and out of the discharge system by a user. Furthermore, the present invention also relates to a method for squeezing juice from fruits by means of the device according to the present invention.

### Prior art

A device for squeezing juice from fruits, such as for example apples, known from the state of the art comprises a reservoir for the fruits, a squeezing system for squeezing the juice from the fruits, a conveyor system for conveying the fruits from the reservoir to the squeezing system, and a discharge system for discharging the juice from the squeezing system to a vessel, such as for example a bottle or a cup, having a predetermined filling volume. The discharge system is arranged for the placement and removal of the vessel into and from the discharge system by a user. Such a device is disclosed for example in US 2018/325158 A1 and US 4 924 770 A.

The discharge system comprises a buffer tank for storing a buffer volume of squeezed juice from the squeezing system. This buffer volume is considerably larger than the filling volume of the vessel. The device is configured to feed a large number of the fruits from the reservoir to the squeezing system by means of the conveyor system so as to fill the buffer tank. If a user then places a vessel into the discharge system, a filling volume of the juice can be discharged from the buffer tank into the vessel. An excess volume of squeezed juice will then be stored in the buffer tank, and optionally replenished by squeezing additionally supplied fruits.

Such a device has the disadvantage that the excess volume of squeezed juice is stored in the buffer tank, which is unhygienic. To remedy this, the buffer tank can be emptied regularly, which, however, represents an unnecessary waste of juice and thus of the fruits squeezed therefore.

### Description of the invention

It is an aim of the present invention to provide a device and a method for squeezing juice from fruits which is hygienic and allows the vessel to be filled precisely up to the filling volume each time, without any unnecessary waste of fruits.

This aim is achieved by means of a device for squeezing juice from fruits and a method for squeezing juice from fruits showing the characteristics of the respective independent claims.

To this end, the present invention, according to a first aspect, provides a device for squeezing juice from fruits. Preferably, the fruits are of a predetermined variety. Preferably, the fruits are spherical fruits. Preferably, the fruits are apples. The device comprises a reservoir for the fruits. The device comprises a squeezing system for squeezing the juice from the fruits. The device comprises a conveyor system for conveying the fruits from the reservoir to the squeezing system. The device comprises a discharge system for discharging the juice from the squeezing system to a vessel having a predetermined filling volume. The vessel is for example a bottle or a cup. Preferably, the vessel is a bottle. The discharge system is arranged for the placement and removal of the vessel into and from the discharge system by a user. The device comprises a first measuring system for weighing the fruits before the fruits are fed from the reservoir to the squeezing system. The device comprises a second measuring system for determining a squeezed volume of the juice. Preferably, the second measuring system is provided in the vicinity of one of the squeezing system, the discharge system and the vessel in the discharge system. The device is preferably configured for performing, after placement of the vessel into the discharge system, the step a) of calculating a required weight in fruits based on a predetermined average juice yield and the filling volume of the vessel. The average juice yield is an average volume of juice per weight unit of the fruits. The device is preferably also configured for performing, after placement of the vessel into the discharge system, the step b) of conveying the fruits from the reservoir to the squeezing system by means of the conveyor system in order to squeeze the fruits in the squeezing system. The device is preferably also configured for performing, after placement of the vessel into the discharge system, the step c) of weighing the fruits by means of the first measuring system before the fruits are fed from the reservoir to the squeezing system. The device is preferably also configured for performing, after placement of the vessel into the discharge system, the step d) of stopping the conveyor system as soon as the required weight in fruits has been fed to the squeezing system. The device is preferably also configured for performing, after placement of the vessel into the discharge system, the step e) of determining the squeezed volume of the juice by means of the second measuring system. The step e) may for example be performed in the squeezing system, in the discharge system or in the vessel in the discharge system. The device is preferably also configured for performing, after placement of the vessel into the discharge system, in the case where the squeezed volume of the juice reaches the filling volume of the vessel, the step f) of stopping at least one of the squeezing system and the discharge system. The device is preferably also configured for performing, after placement of the vessel into the discharge system, in the case where the squeezed volume of the juice does not reach the filling volume of the vessel, the step g) of repeating steps a)-g) based on a remaining filling volume of the vessel. The remaining filling volume is the difference between the filling volume of the vessel and the squeezed volume of the juice. In the case where the squeezed volume of the juice does not reach the filling volume of the vessel, the squeezed volume of the juice will usually reach the remaining filling volume of the vessel when repeating the steps a)-g) based on the remaining filling volume of the vessel, so that the steps a)-f) will be repeated once. Preferably, the device is configured to perform the above steps controlled by means of a controller of the device. Preferably, the controller is at least in communication with the conveyor system, the squeezing system, the discharge system, the first measuring system and the second measuring system.

The device for squeezing juice from fruits according to the present invention offers the advantage that for squeezing the juice, only a sufficient number fruits is squeezed in order to obtain the required weight of the fruits, which required weight, calculated based on the average juice yield, is sufficient for completely filling the filling volume of the vessel. In this way, no fruit is squeezed unnecessarily, and the user is not left with a surplus of squeezed juice. Should the obtained squeezed volume of the juice, as measured by the second measuring system, still be insufficient to completely fill the filling volume of the vessel, an additional and sufficient number of fruits will be squeezed so as to obtain a required weight in fruits, which required weight, calculated based on the average juice yield, is sufficient to completely fill the remaining filling volume of the vessel. Again, then, no fruit is squeezed unnecessarily, and no squeezed juice is wasted unnecessarily.

In an embodiment of the device according to the first aspect of the present invention, the device in step g) is further configured for repeating steps a)-g) based on the remaining filling volume of the vessel and an actual juice yield. The actual juice yield is the ratio of the squeezed volume of the juice to the required weight in fruits.

This embodiment offers the advantage that when repeating the steps a)-g), a more precise determination is performed of the required weight in fruits that needs to be squeezed in order to obtain the remaining filling volume. This is certainly advantageous in the case of large deviations between the average juice yield and the actual juice yield determined based on the required weight in fruits and the squeezed volume of the juice from the previous execution of the steps a)-g).

In an embodiment of the device according to the first aspect of the present invention, the device comprises a weight sensor for measuring the weight of the vessel in the discharge system.

The weight sensor may advantageously be used for performing various functions of the device according to the present invention, such as for example for determining the squeezed volume of the juice, identifying the type of vessel placed in the discharge system by a user, verifying such identification by means of another sensor, checking if the vessel has been placed correctly in the discharge system by a user, etc.

In an embodiment of the device according to the first aspect of the present invention, the second measuring system comprises the weight sensor. The device is configured for measuring the tare weight of the vessel prior to step a) by means of the weight sensor. The device is configured for measuring the gross weight of the vessel containing the squeezed juice in step e) by means of the weight sensor, and for determining the squeezed volume of the juice based on the net weight of the squeezed juice. The net weight of the squeezed juice equals the difference between the gross weight of the vessel containing the squeezed juice, and the tare weight of the vessel. The squeezed volume of the juice is determined by dividing the net weight of the squeezed juice by a predetermined average mass density of the squeezed juice.

This embodiment is advantageous for quickly and easily determining the squeezed volume of the juice by means of the weight sensor as a part of the second measuring system.

In an embodiment of the device according to the first aspect of the present invention, the device comprises a height measuring sensor for measuring the height of the vessel in the discharge system.

The height measuring sensor may advantageously be used for performing various functions of the device according to the present invention, such as for example identifying the type of vessel placed in the discharge system by a user, verifying such identification by means of another sensor, etc.

In an embodiment of the device according to the first aspect of the present invention, the vessel has a predetermined weight. The device is configured for measuring the weight of the vessel prior to step a) by means of the weight sensor. The device is configured to start step a) only if the measured weight of the vessel matches the predetermined weight of the vessel. Preferably, the device is configured to start step a) only if the measured weight of the vessel matches the predetermined weight of the vessel for a predetermined time and/or within a predetermined margin. In an embodiment of the device according to the present invention, the vessel has a predetermined height. The device is configured for measuring the height of the vessel prior to step a) by means of the height measuring sensor. The device is configured to start step a) only if the measured height of the vessel matches the predetermined height of the vessel. Preferably, the device is configured to start step a) only if the measured height of the vessel matches the predetermined height of the vessel within a predetermined margin.

This embodiment is advantageous for checking if a correct vessel has been placed in the discharge system. This is because it may happen that a wrong type of vessel is placed in the discharge system, having a smaller filling volume than the filling volume of the right type of vessel, causing the wrong vessel in question to overflow, and squeezed juice to be spilled as a result. This is disadvantageous for the hygienic use of the device according to the present invention, but is thus advantageously avoided by means of the device according to this embodiment.

Furthermore, this embodiment is also advantageous for checking if the vessel has been placed correctly in the discharge system. This is because it may happen that the user is still holding the vessel while it is placed in the discharge system, increasing the risk of the vessel being removed during discharge of the squeezed juice, and thus the risk of spilling. This is disadvantageous the hygienic use of the device according to the present invention, but is thus advantageously avoided by means of the device according to this embodiment.

Preferably, both the weight sensor and the height measuring sensor are used, so that step a) is only started if both the measured weight and the measured height of the vessel match the predetermined weight and the predetermined height of the vessel, respectively. Thus, both measurements constitute a mutual control, increasing the confidence that the correct vessel has been placed in the discharge system in a correct manner by the user.

In an embodiment of the device according to the first aspect of the present invention, the discharge system comprises a recess for placing the vessel therein. The device comprises a hatch for opening and closing the recess. The device is configured for closing the hatch prior to step a) if, as applicable, the measured weight and/or the measured height of the vessel matches the predetermined weight and/or the predetermined height of the vessel, respectively. Preferably, the device in step f) is further configured for opening the hatch.

This embodiment offers the advantage that the vessel in the discharge system can be shielded from the user during execution of the steps a)-g), so that the vessel cannot be prematurely removed from the discharge system by the user. Spillage of squeezed juice due to premature removal of the vessel is thus avoided, which is advantageous for the hygienic use of the device according to the present invention.

In an embodiment of the device according to the first aspect of the present invention, the vessel is one of a first type having a predetermined first filling volume and a second type having a predetermined second filling volume. The first filling volume is different from the second filling volume. The device comprises a third measuring system for identifying the type of the vessel in the discharge system. The device is configured for identifying the type of the vessel prior to step a) by means of the third measuring system. The device is configured for executing the steps a)-g) based on the filling volume of the first filling volume and the second filling volume in accordance with the identified type of the vessel.

This embodiment offers the advantage that the device according to the present invention can be used with multiple types of vessels, each having a different filling volume, wherein the device will then, for every type of vessel placed in the discharge system by the user, discharge a volume of squeezed juice matching the filling volume of the respective vessel.

In an embodiment of the device according to the first aspect of the present invention, the first type of the vessel has a predetermined first weight. The second type of the vessel has a predetermined second weight. The first weight is different from the second weight. The third measuring system comprises the weight sensor for measuring the weight of the vessel in the discharge system. The device is configured for measuring the weight of the vessel prior to step a) by means of the weight sensor, and for identifying the type of the vessel as being one of the first type and the second type if the measured weight of the vessel matches the first weight and the second weight, respectively.

This embodiment is advantageous for quickly and easily identifying the type of the vessel by means of the weight sensor as a part of the third measuring system.

In an embodiment of the device according to the first aspect of the present invention, the first type of the vessel has a predetermined first height. The second type of the vessel has a predetermined second height. The first height is different from the second height. The third measuring system comprises the height measuring sensor for measuring the height of the vessel in the discharge system. The device is configured for measuring the height of the vessel prior to step a) by means of the height measuring sensor, and for identifying the type of the vessel as being one of the first type and the second type if the measured height of the vessel matches the first height and the second height, respectively.

This embodiment is advantageous for quickly and easily identifying the type of the vessel by means of the height measuring sensor as a part of the third measuring system.

Preferably, both the weight sensor and the height measuring sensor are used in the third measuring system, so that the type of the vessel is identified based on both the measured weight and the measured height of the vessel. Thus, both measurements constitute a mutual control, increasing the confidence of the correct identification of the type of the vessel.

In an embodiment of the device according to the first aspect of the present invention, the conveyor system is arranged for successively conveying individual fruits from the reservoir to the squeezing system. The first measuring system is arranged for weighing the individual fruits fed from the reservoir to the squeezing system by means of the conveyor system.

Feeding and weighing the individual fruits offers the advantage that the conveyor system can always be stopped in time when the required weight in fruits has been fed to the squeezing system. Thus, the situation is avoided where, at the moment when the required weight in fruits has nearly been fed to the squeezing system, two or more fruits would be fed to the squeezing system while one individual fruit would be sufficient for obtaining the required weight.

Furthermore, the present invention, according to a second aspect, provides a device for squeezing juice from fruits. The second aspect of the present invention may be combined with the first aspect of the present invention. The second aspect of the present invention may also be implemented separately from the first aspect of the present invention. Preferably, the fruits are of a predetermined variety. Preferably, the fruits are spherical fruits. Preferably, the fruits are apples. The device comprises a reservoir for the fruits. Preferably, the device comprises a squeezing system for squeezing the juice from the fruits. Preferably, the reservoir in the device is located lower than the squeezing system. The device comprises a conveyor system for conveying the fruits from the reservoir. Preferably, the device comprises a conveyor system for conveying the fruits from the reservoir to the squeezing system. Preferably, the device comprises a discharge system for discharging the juice from the squeezing system to a vessel having a predetermined filling volume. The vessel is for example a bottle or a cup. Preferably, the vessel is a bottle. Preferably, the discharge system is arranged for the placement and removal of the vessel into and from the discharge system by a user. The conveyor system is mounted to an upright wall of the reservoir. The conveyor system may for example be arranged against the upright wall or in the upright wall. The conveyor system extends upwards out of the reservoir from a bottom wall of the reservoir. The conveyor system is arranged for conveying the fruits upwards out of the reservoir. Preferably, the bottom wall of the reservoir slopes down in the direction of the conveyor system.

The device according to the second aspect of the present invention offers the advantage that the reservoir can be arranged at a low point in the device, where it is easily reachable for an operator of the device for placing the fruits into the reservoir and for cleaning the reservoir. This is particularly advantageous if a large number of fruits is to be placed in the reservoir, which is difficult to lift to a greater height.

In an embodiment of the device according to the second aspect of the present invention, the bottom wall of the reservoir has a V-shape which slopes downward in a direction towards the conveyor system.

This embodiment is advantageous for guiding the fruits in the reservoir in the direction of the conveyor system, so that a continuous supply of fruits to the conveyor system can be ensured.

In an embodiment of the device according to the second aspect of the present invention, the conveyor system comprises a conveyor belt provided with consecutive supporting platforms for the fruits which are regularly spaced from each other. The supporting platforms at a front side of the conveyor belt move upwards through a dedicated first opening in the bottom wall of the reservoir. The front of the conveyor belt faces the reservoir. The supporting platforms at a rear side of the conveyor belt move downwards back towards the first opening in the bottom wall of the reservoir. The rear of the conveyor belt faces away from the reservoir.

In an embodiment of the device according to the second aspect of the present invention, the supporting platforms have predetermined dimensions for supporting individual fruits.

This embodiment offers the advantage that each time individual fruits are conveyed upwards on the supporting platforms, offering a good control of the number of fruits being conveyed out of the reservoir by means of the conveyor system. This is particularly advantageous when combined with the first aspect of the present invention, as it allows each individual fruit to be weighed using the first measuring system before being fed to the squeezing system. This allows the conveyor system to always be stopped in time when the required weight in fruits has been fed to the squeezing system. Thus, the situation is avoided where, at the moment when the required weight in fruits has nearly been fed to the squeezing system, two or more fruits would be fed to the squeezing system while one individual fruit would be sufficient for obtaining the required weight.

In an embodiment of the device according to the second aspect of the present invention, the supporting platforms are aligned with a first plane of the bottom wall.

This embodiment offers the advantage that the fruits can easily move from the bottom wall onto the supporting platforms, and thus a continuous feed of fruits onto the supporting platforms can be ensured.

In an embodiment of the device according to the second aspect of the present invention, each of the supporting platforms is provided with at least one downward extending lip.

This embodiment is advantageous for fruits on an underlying supporting platform to be kept on the underlying supporting platform, so that they cannot fall off, or not as easily, and a continuous supply of fruits onto the supporting platforms can be ensured.

In an embodiment of the device according to the second aspect of the present invention, an agitator capable of being moved up and down is arranged through the bottom wall of the reservoir.

This embodiment offers the advantage that "bridges" formed by the fruits in the reservoir can be broken by moving the agitator up and down. This is useful since such bridges can hinder or hamper the movement of fruits in the reservoir towards the conveyor system, so that a continuous supply of fruits is hampered. This problem is thus addressed by means of the agitator capable of being moved up and down.

In an embodiment of the device according to the second aspect of the present invention, the movement of the agitator is synchronized with the movement of the supporting platforms through the first opening in the bottom wall.

This embodiment offers the advantage that potential bridges of the fruits in the reservoir are broken in a synchronized way with the movement of the supporting platforms through the first opening in the bottom wall of the reservoir, so that there is always a good supply of fruits towards the supporting platforms when they move through the first opening. Thus, a good continuous supply of fruits onto the conveyor system is ensured.

Furthermore, the present invention, according to the first aspect, also provides a method for squeezing juice from fruits by means of the device according to the first aspect of the present invention. The method, after placement of the vessel in the discharge system, comprises the step a) of calculating a required weight in fruits based on the average juice yield and the filling volume of the vessel. The method, after placement of the vessel in the discharge system, also comprises the step b) of conveying the fruits from the reservoir to the squeezing system by means of the conveyor system in order to squeeze the fruits in the squeezing system. The method, after placement of the vessel in the discharge system, also comprises the step c) of weighing the fruits by means of the first measuring system before the fruits are fed from the reservoir to the squeezing system. The method, after placement of the vessel in the discharge system, also comprises the step d) of stopping the conveyor system as soon as the required weight in fruits has been fed to the squeezing system. The method, after placement of the vessel in the discharge system, also comprises the step e) of determining the squeezed volume of the juice by means of the second measuring system. The step e) may for example be performed in the squeezing system, in the discharge system or in the vessel in the discharge system. The method, after placement of the vessel in the discharge system, also comprises the step f) of stopping at least one of the squeezing system and the discharge system in the case where the squeezed volume of the juice reaches the filling volume of the vessel. The method, after placement of the vessel in the discharge system, also comprises the step g) of repeating steps a)-g) based on a remaining filling volume of the vessel in the case where the squeezed volume of the juice does not reach the filling volume of the vessel. The remaining filling volume is the difference between the filling volume of the vessel and the squeezed volume of the juice. Preferably, the method is controlled by means of a controller of the device. Preferably, the controller is at least in communication with the conveyor system, the squeezing system, the discharge system, the first measuring system and the second measuring system of the device.

In an embodiment of the method according to the first aspect of the present invention, step g) comprises repeating steps a)-g) based on the remaining filling volume of the vessel and an actual juice yield. The actual juice yield is the ratio of the squeezed volume of the juice to the required weight in fruits.

In an embodiment of the method according to the first aspect of the present invention, the method comprises measuring the tare weight of the vessel prior to step a) by means of the weight sensor. Step e) comprises measuring the gross weight of the vessel containing the squeezed juice by means of the weight sensor, and determining the squeezed volume of the juice based on the net weight of the squeezed juice. The net weight of the squeezed juice equals the difference between the gross weight of the vessel containing the squeezed juice, and the tare weight of the vessel. The squeezed volume of the juice is determined by dividing the net weight of the squeezed juice by a predetermined average mass density of the squeezed juice.

In an embodiment of the method according to the first aspect of the present invention, the method, as applicable, comprises measuring the weight of the vessel prior to step a) by means of the weight sensor and/or measuring the height of the vessel by means of the height measuring sensor. Step a) is only started if, as applicable, the measured weight and/or the measured height of the vessel matches the predetermined weight and/or the predetermined height of the vessel, respectively. Preferably, step a) is only started if, as applicable, the measured weight of the vessel matches the predetermined weight of the vessel for a predetermined time and within a predetermined margin. Preferably, step a) is only started if, as applicable, the measured height of the vessel within a predetermined margin matches the predetermined height of the vessel.

In an embodiment of the method according to the first aspect of the present invention, the method comprises closing the hatch prior to step a) if, as applicable, the measured weight and/or the measured height of the vessel matches the predetermined weight and/or the predetermined height of the vessel, respectively. Preferably, the method comprises closing the hatch prior to step a) if, as applicable, the measured weight of the vessel matches the predetermined weight of the vessel for a predetermined time and within a predetermined margin. Preferably, the method comprises closing the hatch prior to step a) if, as applicable, the measured height of the vessel within a predetermined margin matches the predetermined height of the vessel.

In an embodiment of the method according to the first aspect of the present invention, the method comprises identifying the type of the vessel prior to step a) by means of the third measuring system. The steps a)-g) are performed based on the filling volume of the first filling volume and the second filling volume in accordance with the identified type of the vessel.

In an embodiment of the method according to the first aspect of the present invention, the method comprises measuring the weight of the vessel prior to step a) by means of the weight sensor. The type of the vessel is identified as being one of the first type and the second type if the measured weight of the vessel matches the first weight and the second weight, respectively.

In an embodiment of the method according to the first aspect of the present invention, the method comprises measuring the height of the vessel prior to step a) by means of the height measuring sensor. The type of the vessel is identified as being one of the first type and the second type if the measured height of the vessel matches the first height and the second height, respectively.

### Brief description of the drawings

The invention will hereafter be further elucidated in detail by means of the following description and of the appended drawings.
- Figure 1: shows a device for squeezing juice from fruits according to an embodiment of the present invention.
- Figure 2: shows the inside of the device of Figure 1 .

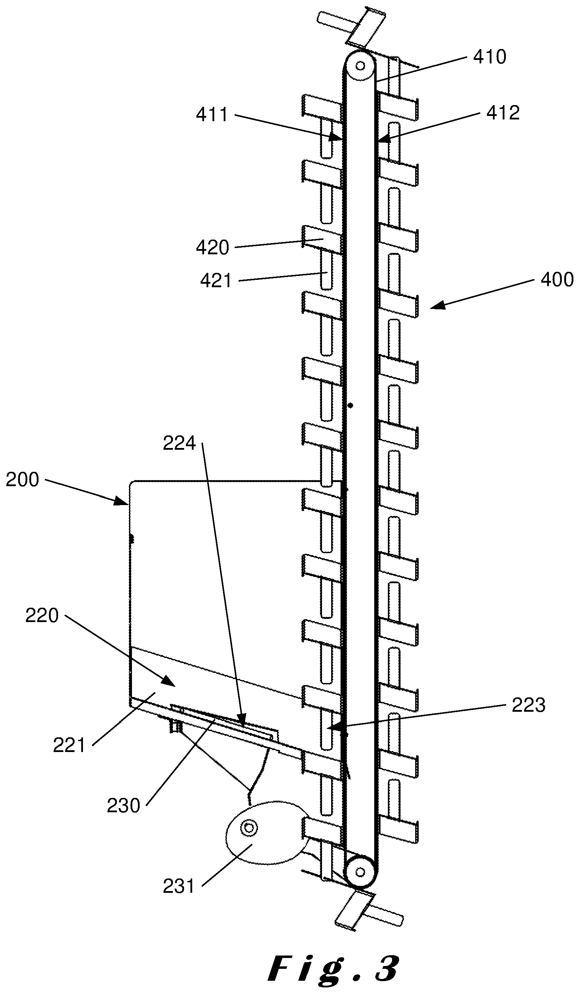

- Figure 3: shows a cross section through the reservoir and the conveyor system of the device of Figure 1 .
- Figure 4: shows a top view onto the reservoir and the conveyor system of the device of Figure 1.

### Embodiments of the invention

The present invention will hereafter be described with respect to particular embodiments and in reference to particular drawings, but the invention is not limited thereto and is defined only by the claims. The drawings shown here are merely schematic depictions and are non-limiting. In the drawings, the dimensions of certain parts may be exaggerated, meaning that the parts in question are not drawn to scale, being for illustrative purposes only. The dimensions and the relative dimensions do not necessarily correspond to actual reductions to practice of the invention.

Furthermore, terms such as "first", "second", "third" and the like are used in the description and in the claims for distinguishing between similar elements, and not necessarily for describing a sequential or chronological order. The terms in question are interchangeable under the appropriate circumstances and the embodiments of the invention can operate in other sequences than those described or illustrated here.

Moreover, terms such as "top", "bottom", "over", "under" and the like are used in the description and the claims for descriptive purposes and not necessarily for indicating relative positions. The terms so used are interchangeable under the appropriate circumstances, and the embodiments of the invention can operate in other orientations than those described or illustrated here.

The term "comprising" and derivative terms, as used in the claims, should not be interpreted as being restricted to the means listed respectively thereafter; the term does not exclude other elements or steps. It should be interpreted as specifying the stated features, integers, steps or components as referred to, without, however, precluding the presence or addition of one or more additional features, integers, steps or components, or groups thereof. Thus, the scope of an expression such as "a device comprising means A and B" is not limited to devices consisting only of components A and B. What is meant, on the contrary, is that with respect to the present invention, the only relevant components of the device are A and B.

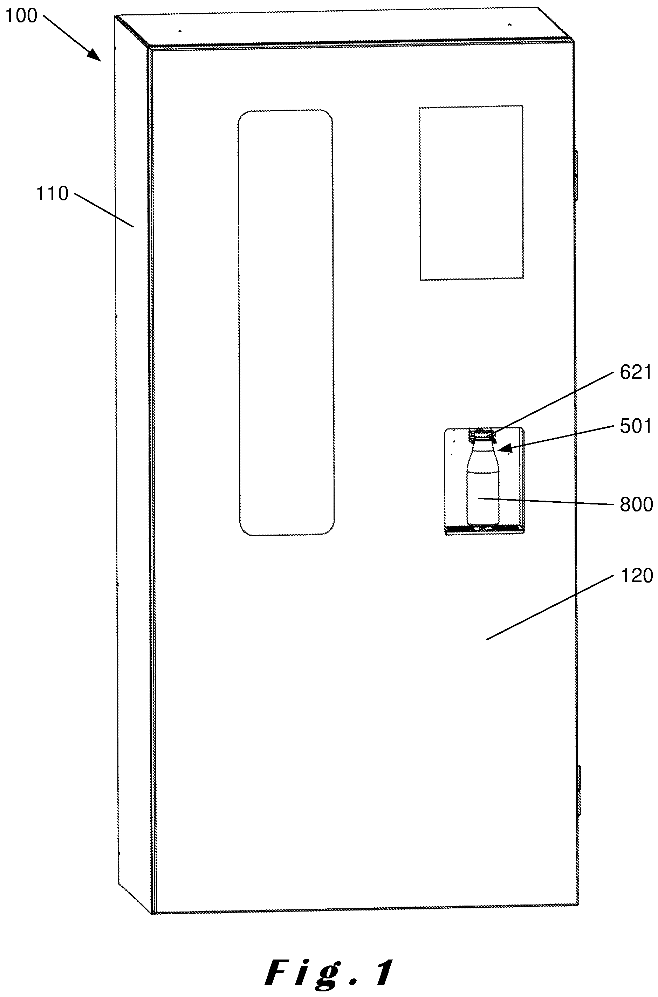

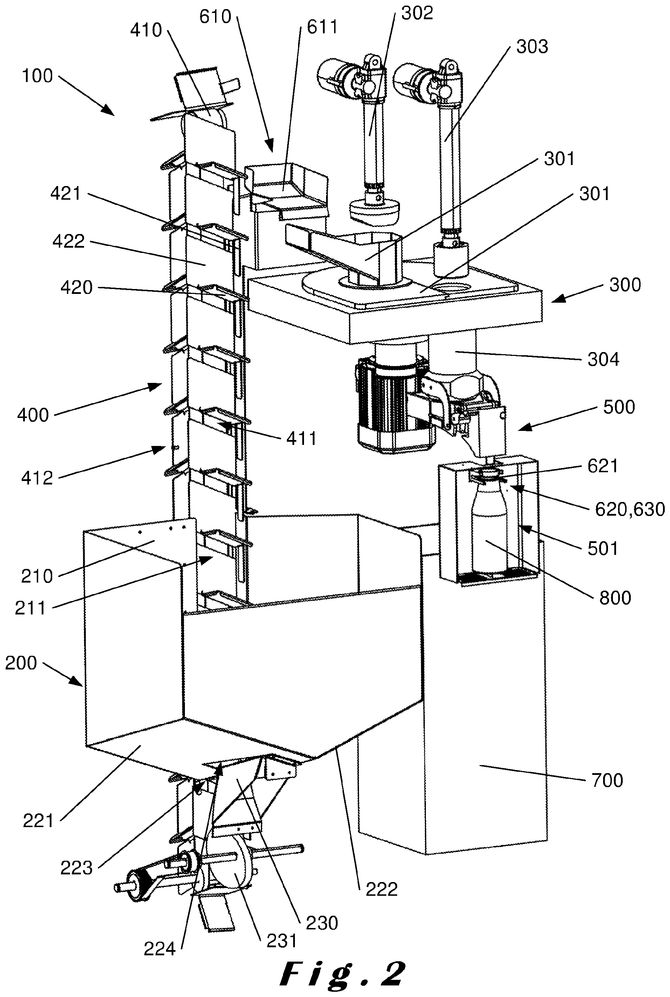

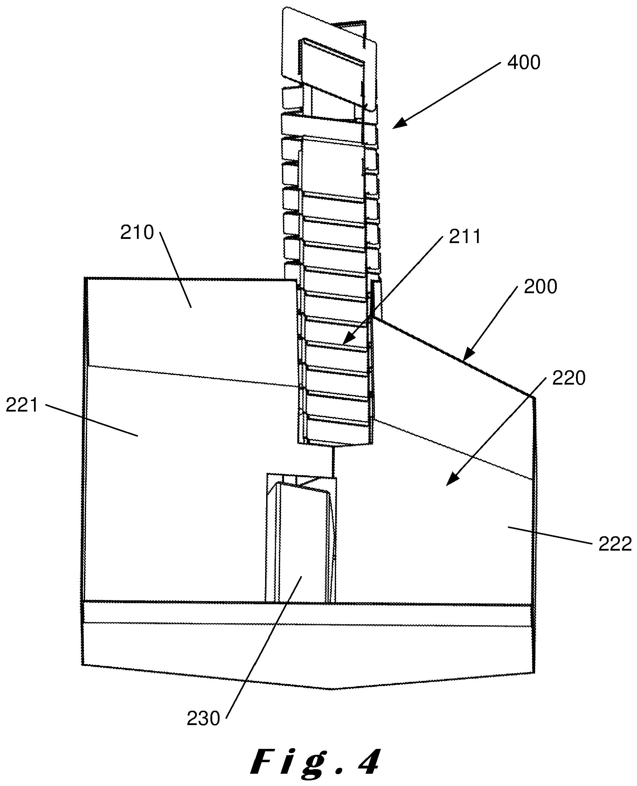

Figure 1 shows a device 100 according to an embodiment of the present invention for squeezing juice from fruits. Preferably, the device 100 is arranged for use with a predetermined variety fruits, preferably substantially spherical fruits, such as for example apples. Figure 2 shows the device 100 of Figure 1 without its enclosing housing 110, so that the main parts in the inside of the device 100 are visible. The housing 110 is provided at the front with a closable door 120, so that the inside of the device 100 is accessible to an operator of the device 100, for example for replenishing fruits, for cleaning and for maintenance. Further details of the device 100 are shown in the cross section of Figure s through part of the device 100 of Figure 1 , and the top view of Figure 4 onto the same part of the device 100.

The device 100 comprises a reservoir 200 for the fruits. The reservoir 200 is located at the bottom of the device 100 so that the reservoir 200 is easily accessible to an operator of the device 100 for placing the fruits into the reservoir 200 and for cleaning the reservoir 200.

Furthermore, the device comprises 100 a conveyor system 400 mounted to a dedicated slot 211 in an upright wall 210 of the reservoir for conveying the fruits upwards out of the reservoir 200. The conveyor system 400 comprises a conveyor belt 410 extending upward out of the reservoir 200 from a first opening 223 in a bottom wall 220 of the reservoir 200. The conveyor belt 410 is provided with supporting platforms 420 for the fruits. The conveyor belt 410 is driven in such a way that the supporting platforms 420 at a front 411 of the conveyor belt 410 move upwards, and so that the supporting platforms 420 at a rear 412 of the conveyor belt 410 move downwards. Here, the front 411 of the conveyor belt 410 is the side of the conveyor belt 410 facing the inside of the reservoir 200, and is the rear 412 of the conveyor belt 410 the side of the conveyor belt 410 facing away from the inside of the reservoir 200. In this arrangement, the supporting platforms 420 the reservoir 200 enter through the first opening 223 in the bottom wall 220 of the reservoir 200, to then move upwards at the front 411 of the conveyor belt 410, first in the slot 211 in the upright wall 210 of the reservoir 200 and subsequently out of the reservoir 200. At the top of the conveyor belt 410, the supporting platforms 420 are tilted around the top of the conveyor belt 410, to then move downwards along the rear 412 of the conveyor belt 410. At the bottom of the conveyor belt 410, the supporting platforms 420 are tilted around the bottom of the conveyor belt 410, to then enter the reservoir 200 again at the front 411 of the conveyor belt 410 through the first opening 223 in the bottom wall 220 of the reservoir 200.

The supporting platforms 420 have predetermined dimensions arranged so that only individual fruits fit onto the supporting platforms 420. The supporting platforms 420, in other word, are dimensioned so that they offer a supporting surface for an individual fruit, but not for an additional fruit. These dimensions may be determined by the person skilled in the art depending on the type of fruit for which the device 100 is intended. For a spherical fruit, such as for example an apple, the dimensions of the supporting platforms 420 may for example be determined based on the average diameter of the respective type of fruit.

The supporting platforms 420 are spaced regularly from each other. This regular spacing is chosen so that individual fruits fit between consecutive supporting platforms 420, without leaving too much space between consecutive supporting platforms 420, so that individual fruits can be conveyed upwards in close succession by means of the conveyor system 400.

The bottom wall 220 of the reservoir 200 has a V-shape sloping downwards in the direction of the first opening 223 in the bottom wall 220 of the reservoir where the supporting platforms 420 enter the reservoir 200. This V-shape is created from a downward sloping first plane 221 of the bottom wall 220 and a downwards sloping second plane 222 of the bottom wall, which first plane 221 and second plane 222 are arranged at an angle to each other. Such a downward sloping V-shape offers the advantage that the fruits in the reservoir 200 are urged under the influence of gravity in the direction of the first opening 223 in the bottom wall 220 of the reservoir 200, to be conveyed upwards from there out of the reservoir 200.

In the embodiment of the device 100 shown, the first opening 223 in the bottom wall 220 of the reservoir 200 is arranged through the first plane 221 of the bottom wall 220. To ensure that the fruits in the reservoir 200 can move freely onto the supporting platforms 420 entering the reservoir 200 through the first opening 223, the supporting platforms 420 are aligned with the first plane 221 of the bottom wall 220.

Due to the sloping of every supporting platform 420, a fruit is urged downward onto the supporting platform 420 under the influence of gravity, and thereby pressed on one side against the conveyor belt 410, or as in the embodiment shown, against a dedicated upright back wall 422 of the supporting platform 420 abutting the conveyor belt 410, and on another side against a lip 421 extending downwards from an overhead supporting platform 421. As a result, the fruits remain firmly planted on the supporting platforms 420 while being conveyed upwards out of the reservoir 200. The downward extending lips 421 on the supporting platforms 420 also offer the further advantage that the fruits do not rub against the upright wall 210 of the reservoir 200 while being conveyed upwards out of the reservoir 200, and thus cannot be damaged.

The first plane 221 of the bottom wall 220 of the reservoir 200 is also provided with a second opening 224. This second opening 224 abuts the second plane 222 of the bottom wall 220 of the reservoir 200, and is located in front of the first opening 223 in the bottom wall 220 of the reservoir 200. An agitator 230 extends through the second opening 224 in the bottom wall 220, arranged for moving up and down. To this end, the agitator 230 is connected through a camshaft 231 to the drive of the conveyor belt 410. This camshaft 231 is configured in such a way that the up-and-down movement of the agitator 230 is synchronized with the supporting platforms 420 entering the reservoir 200 through the first opening 223 through the bottom wall 220. The agitator 230 is arranged for breaking "bridges" in the fruits in the reservoir 200. Such bridges arise when fruits are pressed together, for example in an arch or dome shape, and the fruits in the reservoir 200 cannot descend further in the direction of the first opening 223 in the bottom wall 220 of the reservoir 200. By moving the agitator 230 up and down, any bridges being formed are continuously being pressed against from below, so that they are broken and the fruits can again further descend in the direction of the first opening 223 in the bottom wall 220 of the reservoir 200, and thus in the direction of the conveyor system 400. In this way, a smooth flow of the fruits to the conveyor system 400 is always ensured in the reservoir 200.

Downstream from the conveyor system 400, the device 100 comprises a weighing platform 611 followed by a squeezing system 300 of the device 100, which squeezing system 300 is arranged for squeezing the fruits. The weighing platform 611 is part of a first measuring system 610 of the device 100 arranged for weighing the fruits before they are fed from the conveyor system 400 to the squeezing system 300.

The fruits on the conveyor system 400 are transferred to the weighing platform 611 due to the fact that, as mentioned, the supporting platforms 420 are tilted at the top of the conveyor belt 410 around the top of the conveyor belt 410. As a result, the downward extending lip 421 of an overhead supporting platform 420 is also each time tilted away from a fruit located on an underlying supporting platform 420, causing the respective fruit to roll from the sloping underlying supporting platform 420 onto the weighing platform 611 under the influence of gravity.

The squeezing system 300 comprises a slide 301 extending from the weighing platform 611 of the first measuring system 610 to an entrance of the squeezing system 300, so as to guide a fruit moving of off the weighing platform 611 toward the entrance of the squeezing system 300. The squeezing system 300 further comprises a first stamper 302 arranged for pressing the fruit at the entrance of the squeezing system 300 against a rotating shredder in the inside of the squeezing system 300. The shredded pulp of the fruits is transported inside the squeezing system 300 to a juicing tube 304 of the squeezing system 300, where the pulp is compressed by means of a second stamper 303 of the squeezing system so as to press juice out of it, which is transported to the discharge system 500 of the device 100. The squeezed pulp is then, after opening a bottom of the juicing tube 304, pressed out of the juicing tube 304 by means of the second stamper 303 toward a waste reservoir 700 of the device 100. The squeezing system 300 may, however, be carried out in any other suitable manner known to the person skilled in the art, and may for example also be tailored to the type of fruits for which the device 100 is intended.

The discharge system 500 of the device 100 is arranged for discharging the juice from the squeezing system 300 to a vessel 800. The vessel 800 is for example a bottle as shown in Figure 1 , but in other embodiments, the device 100 may also be provided with other kinds of vessels 800, such as for example a cup. The discharge system 500 is arranged in such a way that a user of the device 100 can place the vessel 800 into the discharge system 500 and removed it from the discharge system 500. This assumes that during normal use of the device 100, an empty vessel 800 is placed in the discharge system 500 by the user to be filled, and the vessel 800 is taken out of the discharge system 500 by the user after the vessel 800 has been filled with squeezed juice by the discharge system 500.

The device 100 according to the embodiment shown is configured to be used with at least a vessel 800 of a first type having a predetermined first filling volume and a vessel 800 of a second type having a predetermined second filling volume, wherein the first filling volume and the second filling volume are different from each other. To enable the device 100 to distinguish between the vessel 800 of the first type and the vessel 800 of the second type, the vessel 800 of the first type has a predetermined first weight and a predetermined first height, and the vessel 800 of the second type has a predetermined second weight and a predetermined second height, wherein the first weight and the second weight are different from each other, and wherein the first height and the second height are different from each other.

The discharge system 500 comprises a recess 501 in which the vessel 800 is to be placed. Furthermore, the discharge system 500 also comprises a hatch (not shown) for opening and closing the recess 501. The device 100 is configured for closing the hatch, and thus the recess 501 , after a vessel 800 has been placed in the recess 501 and prior to starting to squeeze juice from the fruits by means of the device 100. The device 100 is further configured for opening the hatch, and thus the recess 501 , again after the vessel 800 has been filled with squeezed juice, so that the user can take the vessel 800 containing the squeezed juice out of the recess 501.

The device 100 is provided with a holder 621 in the recess 501 in which the vessel 800 is to be suspended. In the embodiment shown, the holder 621 is arranged so that the vessel 800, being a bottle, can be suspended in the holder 621 by its neck. However, in other embodiments of the device 100, the holder 621 may also be provided in a different way for suspending a vessel 800 of another type than a bottle therein. The holder 621 is connected to a weight sensor (not shown) which is arranged for weighing the vessel 800 being suspended in the holder 621 .

The weight sensor is part of a second measuring system 620 of the device 100 that is arranged for determining a squeezed volume of the juice in the vessel 800. Determining the squeezed volume of the juice is carried out by measuring the tare weight of the empty vessel 800 in the holder 621 , prior to squeezing, by means of the weight sensor. While the vessel 800 is being filled with squeezed juice from the discharge system 500, the gross weight of the vessel 800 containing the squeezed juice in the holder 621 is further measured by means of the weight sensor. Next, the net weight of the squeezed juice is calculated by taking the difference between the gross weight of the vessel 800 containing the squeezed juice and the tare weight of the empty vessel 800. From this net weight of the squeezed juice, the volume of the squeezed juice in the vessel 800 is then calculated by dividing the net weight by a predetermined average mass density of the squeezed juice. The predetermined average mass density of the squeezed juice is retrieved from a memory (not shown) of the device 100. The predetermined average mass density may for example be a value from the literature for squeezed juice from the fruits for which the device 100 is intended, or may for example be determined beforehand by performing mass density measurements carried out on squeezed juice from the fruits for which the device 100 is intended.

The weight sensor is also part of a third measuring system 630 of the device 100 that is arranged for identifying the type of the vessel 800 in the discharge system 500. Identifying the type of the vessel 800 is carried out by measuring the weight of the empty vessel 800 in the holder 621 , prior to starting to squeeze juice out of the fruits, by means of the weight sensor. If the measured weight of the vessel 800 matches the predetermined first weight of a vessel 800 of the first type, preferably for a predetermined time and/or within a predetermined margin, the vessel 800 in the holder 621 is identified as being a vessel 800 of the first type. If the measured weight of the vessel matches the predetermined second weight of a vessel 800 of the second type, preferably for a predetermined time and/or within a predetermined margin, the vessel 800 in the holder 621 is identified as being a vessel 800 of the second type. If the measured weight of the vessel 800 does not match the first weight or the second weight, then it can be inferred from this that a vessel 800 not intended to be used with the device 100 was placed in the discharge system 500, or that the vessel 800 has not been placed in the discharge system 500 in a correct manner, for example as a result of the user still holding the vessel 800.

The third measuring system 630 is further provided with a height measuring sensor (not shown) in the recess 501 , arranged for measuring the height of the vessel 800 placed in the discharge system 500. Identifying the type of the vessel 800 is carried out by measuring the height of the vessel 800 in the discharge system 500, prior to starting to squeeze juice out of the fruits, by means of the height measuring sensor. If the measured height of the vessel 800 matches the predetermined first height of a vessel 800 of the first type, preferably within a predetermined margin, the vessel 800 in the discharge system 500 is identified as being a vessel 800 of the first type. If the measured height of the vessel matches the predetermined second height of a vessel 800 of the second type, preferably within a predetermined margin, the vessel 800 in the holder 621 is identified as being a vessel 800 of the second type. If, however, the measured height of the vessel 800 does not match the first height or the second height, then it can be inferred from this that for example a vessel 800 not intended to be used with the device 100 was placed in the discharge system 500, or that the vessel 800 has not been placed in the discharge system 500 in a correct manner, for example in an incorrect orientation.

The height measuring sensor may for example be a curtain sensor, a combination of separate optical sensors at different positions in the recess 501 , an intelligent camera with vessel recognition based on height and/or profile, or a profile sensor for measuring a 2D profile of the vessel 800.

In an embodiment of the device 100, one of the weight sensor and the height measuring sensor, preferably the height measuring sensor, may be used as a primary sensor in the third measuring system 630 for identifying the type of the vessel 800 in the discharge system 500, wherein the other sensor is merely used for checking.

The device according to the embodiment shown is intended for performing the steps which will be further explained below. Preferably, the execution of these steps is controlled by means of a controller (not shown) of the device 100, which controller is at least in communication with the conveyor system 400, the squeezing system 300, the discharge system 500, the first measuring system 610, the second measuring system 620, the third measuring system 630 and a memory of the device 100.

First, the vessel 800 is placed in the discharge system 500 of the device 100 by a user by suspending the vessel 800 in the holder 621 in the recess 501 .

Then, the type of the vessel 800 in the discharge system 500 is identified by means of the third measuring system 630, as already explained above. If the vessel 800 is identified as being one of the first type and the second type, the recess 501 is first closed off by closing the hatch, so that the user can no longer manipulate the vessel during the process of squeezing the juice out of the fruits by means of the device 100. Next, the process of squeezing juice out of the fruits by means of the device 100 will be started based on the filling volume of the first filling volume and the second filling volume, in accordance with the type of the vessel 800 identified. If, however, the vessel 800 has not been identified as being one of the first type and the second type, the process of squeezing juice out of the fruits by means of the device 100 will not be started. In that case, an error message can also be sent to the user, so that the user can correct their error in placing the vessel 800 in the discharge system 500. Such an error message may for example be a visual signal or a text message on a display of the device 100 or an auditory signal emitted by means of a loudspeaker of the device 100.

The process of squeezing juice out of the fruits by means of the device
100 comprises the steps a)-g), which will be further elucidated below.

The step a) comprises calculating a required weight in fruits based on a predetermined average juice yield and the filling volume of the vessel 800. This required weight is the weight in fruits needed so as to obtain a volume of squeezed juice after squeezing the fruits that matches the filling volume of the vessel 800. The average juice yield is an average volume of juice obtained per weight unit of the fruits after squeezing the fruits. The predetermined average juice yield is retrieved from a memory of the device 100. The predetermined average juice yield may for example be a value from the literature for the fruits for which the device 100 is intended, or may for example be determined beforehand by carrying out measurements of the volume of squeezed juice from weighed fruits of the fruits for which the device 100 is intended. The average juice yield may be based on an average weight of juice obtained per weight unit of the fruits after squeezing the fruits. Here, an additional conversion is required from the average weight of juice to an average volume of juice, for example by means of a predetermined average mass density of the juice known from the literature or determined by measurements.

The step b) comprises conveying the fruits from the reservoir 200 to the squeezing system 300 by means of the conveyor system 400 in order to squeeze the fruits in the squeezing system 300.

The step c) comprises weighing the fruits by means of the first measuring system 610 before the fruits are fed to the squeezing system 300 from the reservoir 200. In the embodiment of the device 100 shown, weighing the fruits is carried out on the weighing platform 611 of the first measuring system 610 located between the conveyor system 400 and the squeezing system 300. In alternative embodiments, this could for example also already be carried out on the conveyor system 400 itself.

The step d) comprises stopping the conveyor system 400 as soon as the required weight in fruits has been fed to the squeezing system 300. As a result, no further fruits are fed to the squeezing system 300, so that fruits will not be squeezed unnecessarily and unnecessary waste of fruits is avoided.

The step e) comprises determining the squeezed volume of the juice by means of the second measuring system 620. This step is performed continuously while squeezing the fruits in the squeezing system 300, so that the increase of the squeezed volume of the juice is monitored. In the embodiment of the device 100 shown, determining the squeezed volume of the juice in the vessel 800 is carried out in the discharge system 500. In alternative embodiments, this could for example also take place in the squeezing system 300 or in the discharge system 500 itself. To this end, a buffer tank of limited volume may then for example be used, in which the squeezed juice is briefly stored for the purpose of volume measurement, before discharging the squeezed juice through the discharge system 500 to the vessel 800 in the discharge system 500.

The step f) comprises, in the case where the continuously measured squeezed volume of the juice reaches the filling volume of the vessel, stopping the squeezing system 300 so that no further squeezed juice is fed from the squeezing system 300 to the discharge system 500 and discharged through the discharge system to the vessel 800 in the discharge system 500, and/or stopping the discharge system 500 so that no further squeezed juice is discharged through the discharge system 500 to the vessel 800 in the discharge system. Excess squeezed juice, excess pulp and/or other remnants of the fruits in the squeezing system 300 or the discharge system are then removed in an appropriate manner from the squeezing system 300 and the discharge system 500 to the waste reservoir 700. After this step, the recess 501 of the discharge system 500 is further opened again, so that the user can take the vessel 800 filled with the squeezed juice out of the discharge system 500.

The step g) comprises, in the case where the continuously measured squeezed volume of the juice does not reach the filling volume of the vessel 800, repeating steps a)-g) based on a remaining filling volume of the vessel 800. The remaining filling volume is the difference between the filling volume of the vessel 800 and the eventually measured squeezed volume of the juice. The process of squeezing juice out of the fruits by means of the device 100 is thus repeated so as to squeeze a required weight in fruits needed to obtain a volume of squeezed juice after squeezing the fruits that matches the remaining filling volume of the vessel 800. When repeating these steps, the required weight in fruits in step a) can be determined again based on the average juice yield used before. As an alternative, an actual juice yield may also be used instead of the average juice yield. Here, the actual juice yield is the ratio of the eventually measured squeezed volume of the juice and the required weight in fruits from the previous execution of the steps a)-b). This is advantageous for avoiding a large number of repetitions of the steps a)-g) in the case where the squeezed volume of the juice for the fruits used strongly deviates from what is to be expected based on the average juice yield.

## Claims

1. A device (100) for squeezing juice from fruits, wherein the device (100) comprises:
a reservoir (200) for the fruits;
a squeezing system (300) for squeezing the juice from the fruits;
a conveyor system (400) for conveying the fruits from the reservoir (200) to the squeezing system (300);
a discharge system (500) for discharging the juice from the squeezing system (300) to a vessel (800) having a predetermined filling volume, wherein the discharge system (500) is arranged for the placement and removal of the vessel (800) into and out of the discharge system (500) by a user;
**characterized in that** it further comprises
a first measuring system (610) for weighing the fruits before the fruits are fed to the squeezing system (300) from the reservoir (200);
a second measuring system (620) for determining a squeezed volume of the juice;
wherein the device (100) is configured for carrying out the following steps after placement of the vessel (800) in the discharge system (500);
a) calculating a required weight in fruits based on a predetermined average juice yield and the filling volume of the vessel (800), wherein the average juice yield is an average volume of juice per weight unit of the fruits;
b) conveying the fruits from the reservoir (200) to the squeezing system (300) by means of the conveyor system (400) in order to squeeze the fruits in the squeezing system (300);
c) weighing the fruits by means of the first measuring system (610) before the fruits are fed to the squeezing system (300) from the reservoir (200);
d) stopping the conveyor system (400) as soon as the required weight in fruits has been fed to the squeezing system (300);
e) determining the squeezed volume of the juice by means of the second measuring system (620);
f) in the case where the squeezed volume of the juice reaches the filling volume of the vessel (800), stopping at least one of the squeezing system (300) and the discharge system (500);
g) in the case where the squeezed volume of the juice does not reach the filling volume of the vessel (800), repeating steps a)-g) based on a remaining filling volume of the vessel (800), which is the difference between the filling volume of the vessel (800) and the squeezed volume of the juice.

2. The device (100) according to claim 1, wherein the device (100) in step g) is further configured for repeating steps a)-g) based on the remaining filling volume of the vessel (800) and an actual juice yield, wherein the actual juice yield is the ratio of the squeezed volume of the juice to the required weight in fruits.

3. The device (100) according to claim 1 or 2, wherein the device (100) comprises a weight sensor for measuring the weight of the vessel (800) in the discharge system (500).

4. The device (100) according to claim 3, wherein the second measuring system (620) comprises the weight sensor, wherein the device (100) is configured for measuring the tare weight of the vessel (800) prior to step a) by means of the weight sensor, and for measuring the gross weight of the vessel (800) containing the squeezed juice in step e) by means of the weight sensor, and for determining the squeezed volume of the juice based on the net weight of the squeezed juice.

5. The device (100) according to any of the claims 1-4, wherein the device comprises a height measuring sensor for measuring the height of the vessel (800) in the discharge system (500).

6. The device (100) according to any of the claims 1-5, wherein, at least when combined with claim 3, the vessel (800) has a predetermined weight, and the device (100) is configured for measuring the weight of the vessel (800) prior to step a) by means of the weight sensor, and for starting step a) only if the measured weight of the vessel (800) matches the predetermined weight of the vessel (800), and/or wherein, at least when combined with claim 5, the vessel (800) has a predetermined height, and the device (100) is configured for measuring the height of the vessel (800) prior to step a) by means of the height measuring sensor, and for starting step a) only if the measured height of the vessel (800) matches the predetermined height of the vessel (800).

7. The device (100) according to claim 6, wherein the discharge system (500) comprises a recess (501) for placing the vessel (800) therein, and a hatch for opening and closing the recess (501), wherein the device (100) is configured for closing the hatch prior to step a) if, as applicable, the measured weight and/or the measured height of the vessel (800) matches the predetermined weight and/or the predetermined height of the vessel, respectively (800).

8. **The** device (100) according to any of the claims 1-7, wherein the vessel (800) is one of a first type having a predetermined first filling volume and a second type having a predetermined second filling volume, wherein the first filling volume is different from the second filling volume, wherein the device (100) comprises a third measuring system (630) for identifying the type of the vessel (800) in the discharge system (500), wherein the device (100) is configured for identifying the type of the vessel (800) prior to step a) by means of the third measuring system (630), and for performing the steps a)-g) based on the filling volume of the first filling volume and the second filling volume in accordance with the identified type of the vessel (800).

9. **The** device (100) according to claim 8, at least when combined with claim 3, wherein the first type of the vessel (800) has a predetermined first weight, wherein the second type of the vessel (800) has a predetermined second weight, wherein the first weight is different from the second weight, wherein the third measuring system (630) comprises the weight sensor for measuring the weight of the vessel (800) in the discharge system (500), wherein the device (100) is configured for measuring the weight of the vessel (800) prior to step a) by means of the weight sensor, and for identifying the type of the vessel (800) as being one of the first type and the second type if the measured weight of the vessel (800) matches the first weight and the second weight, respectively.

10. The device (100) according to claim 8 or 9, at least when combined with claim 5, wherein the first type of the vessel (800) has a predetermined first height, wherein the second type of the vessel (800) has a predetermined second height, wherein the first height is different from the second height, wherein the third measuring system (630) comprises the height measuring sensor for measuring the height of the vessel (800) in the discharge system (500), wherein the device (100) is configured for measuring the height of the vessel (800) prior to step a) by means of the height measuring sensor, and for identifying the type of the vessel (800) as being one of the first type and the second type if the measured height of the vessel (800) matches the first height and the second height, respectively.

11. The device (100) according to any of the claims 1-10, wherein the conveyor system (400) is mounted to an upright wall (210) of the reservoir (200), wherein the conveyor system (400) extends upwards out of the reservoir (200) from a bottom wall (220) of the reservoir (200), wherein the conveyor system (400) is arranged for conveying the fruits upwards out of the reservoir (200).

12. The device (100) according to claim 11, wherein the bottom wall (220) of the reservoir (200) has a V-shape which slopes downward in a direction towards the conveyor system (400).

13. The device (100) according to claim 11 or 12, wherein the conveyor system (400) comprises a conveyor belt (410) provided with consecutive supporting platforms (420) for the fruits which are regularly spaced from each other, wherein the supporting platforms (420) move upwards at a front (411) of the conveyor belt (410), facing the reservoir (200), through a dedicated first opening (223) in the bottom wall (220) of the reservoir (200), and wherein the supporting platforms (420) move downwards at a rear (412) of the conveyor belt (410), facing away from the reservoir (200), back to the first opening (223) in the bottom wall (220) of the reservoir (200).

14. The device (100) according to any of the claims 11-13, wherein an agitator capable of being moved up and down (230) is arranged through the bottom wall (220) of the reservoir (200).

15. A method for squeezing juice from fruits by means of the device (100) according to any of the claims 1-14, wherein the method, after placement of the vessel (800) in the discharge system (500), comprises the steps of:
a) calculating a required weight in fruits based on the average juice yield and the filling volume of the vessel (800);
b) conveying the fruits from the reservoir (200) to the squeezing system (300) by means of the conveyor system (400) in order to squeeze the fruits in the squeezing system (300);
c) weighing the fruits by means of the first measuring system (610) before the fruits are fed to the squeezing system (300) from the reservoir (200);
d) stopping the conveyor system (400) as soon as the required weight in fruits has been fed to the squeezing system (300);
e) determining the squeezed volume of the juice by means of the second measuring system (620);
f) in the case where the squeezed volume of the juice reaches the filling volume of the vessel (800), stopping at least one of the squeezing system (300) and the discharge system (500);
g) in the case where the squeezed volume of the juice does not reach the filling volume of the vessel (800), repeating steps a)-g) based on a remaining filling volume of the vessel (800), which is the difference between the filling volume of the vessel (800) and the squeezed volume of the juice.

## Patentansprüche

1. Vorrichtung (100) zum Auspressen von Fruchtsaft, wobei die Vorrichtung (100) umfasst:
einen Vorratsbehälter (200) für die Früchte;
ein Auspresssystem (300) zum Auspressen des Fruchtsafts;
ein Fördersystem (400) zum Transportieren der Früchte aus dem Vorratsbehälter (200) zu dem Auspresssystem (300);
ein Austragssystem (500) zum Austragen des Fruchtsafts aus dem Auspresssystem (300) in einen Behälter (800) mit einem vorgegebenen Füllvolumen, wobei das Austragssystem (500) ausgebildet ist zum Einsetzen/Entnehmen des Behälters (800) durch einen Benutzer in das bzw. aus dem Austragssystem (500);
**dadurch gekennzeichnet, dass** die Vorrichtung ferner umfasst:
ein erstes Messsystem (610) zum Wiegen der Früchte vor deren Aufgabe aus dem Vorratsbehälter (200) in das Auspresssystem (300);
ein zweites Messsystem (620) zum Bestimmen eines SaftAuspressvolumens;
wobei die Vorrichtung (100) dazu eingerichtet ist, nach dem Einsetzen des Behälters (800) in das Austragssystem (500) die folgenden Schritte durchzuführen:
a) Berechnen einer benötigten Menge an Früchten auf der Grundlage eines vorgegebenen durchschnittlichen Saftertrags und des Füllvolumens des Behälters (800), wobei der durchschnittliche Saftertrag ein durchschnittliches Saftvolumen pro Gewichtseinheit der Früchte ist;
b) Transportieren der Früchte durch ein Fördersystem (400) aus dem Vorratsbehälter (200) zu dem Auspresssystem (300) zum Auspressen der Früchte in dem Auspresssystem (300);
c) Wiegen der Früchte mittels des ersten Messsystems (610) vor dem Zuführen der Früchte aus dem Vorratsbehälter (200) zu dem Auspresssystem (300);
d) Stoppen des Fördersystems (400), sobald das benötigte Gewicht an Früchten in das Auspresssystem (300) aufgegeben wurde;
e) Bestimmen des Auspressvolumens des Safts mittels des zweiten Messsystems (620);
f) in dem Fall, dass das Auspressvolumen des Safts das Füllvolumen des Behälters (800) erreicht, Stoppen von zumindest einem des Auspresssystems (300) und des Austragssystems (500);
g) in dem Fall, dass das Auspressvolumen des Safts das Füllvolumen des Behälters (800) nicht erreicht, Wiederholen der Schritte a)-g) basierend auf dem restlichen Füllvolumen des Behälters (800), welches die Differenz zwischen dem Füllvolumen des Behälters (800) und dem Auspressvolumen des Safts ist.

2. Vorrichtung (100) nach Anspruch 1, wobei die Vorrichtung (100) in Schritt g) ferner dazu eingerichtet ist, die Schritte a)-g) auf der Grundlage des restlichen Füllvolumens des Behälters (800) und eines tatsächlichen Saftertrags zu wiederholen, wobei der tatsächliche Saftertrag das Verhältnis des Saftauspressvolumens zu dem benötigten Gewicht an Früchten ist.

3. Vorrichtung (100) nach Anspruch 1 oder 2, wobei die Vorrichtung (100) einen Gewichtssensor zum Messen des Gewichts des Behälters (800) in dem Austragssystem (500) umfasst.

4. Vorrichtung (100) nach Anspruch 3, wobei das zweite Messsystem (620) den Gewichtssensor umfasst, wobei die Vorrichtung (100) dazu eingerichtet ist, vor Schritt a) das Eigengewicht des Behälters (800) mittels des Gewichtssensors zu messen und in Schritt e) das Gesamtgewicht des Behälters (800) mit dem darin enthaltenen ausgepressten Fruchtsaft mittels des Gewichtssensors zu messen und auf der Grundlage des Nettogewichts des ausgepressten Fruchtsafts das Auspressvolumen des Safts zu ermitteln.

5. Vorrichtung (100) nach einem der Ansprüche 1 - 4, wobei die Vorrichtung einen Höhenmesssensor zum Messen der Höhe des Behälters (800) in dem Austragssystem (500) umfasst.

6. Vorrichtung (100) nach einem der Ansprüche 1 - 5, wobei zumindest in Kombination mit Anspruch 3 der Behälter (800) ein vorgegebenes Gewicht aufweist und wobei die Vorrichtung (100) dazu eingerichtet ist, vor Schritt a) das Gewicht des Behälters (800) mittels des Gewichtssensors zu messen und Schritt a) nur zu starten, wenn das gemessene Gewicht des Behälters (800) mit dem vorgegebenen Gewicht des Behälters (800) übereinstimmt, und/oder wobei zumindest in Kombination mit Anspruch 5 der Behälter (800) eine vorgegebene Höhe aufweist und die Vorrichtung (100) dazu eingerichtet ist, vor Schritt a) die Höhe des Behälters (800) mittels des Höhenmesssensors zu messen und Schritt a) nur zu starten, wenn die gemessene Höhe des Behälters (800) mit der vorgegebenen Höhe des Behälters (800) übereinstimmt.

7. Vorrichtung (100) nach Anspruch 6, wobei das Austragssystem (500) eine Mulde (501) zum Platzieren des Behälters (800) in derselben und eine Klappe zum Öffnen und Verschließen der Mulde (501) umfasst, wobei die Vorrichtung (100) dazu eingerichtet ist, vor Schritt a) die Mulde zu verschließen, wenn das gemessene Gewicht und/oder die gemessene Höhe des Behälters (800) gegebenenfalls mit dem vorgegebenen Gewicht und/oder der vorgegebenen Höhe des Behälters (800) übereinstimmt.

8. Vorrichtung (100) nach einem der Ansprüche 1 - 7, wobei der Behälter (800) ein Behälter eines ersten Typs mit einem vorgegebenen ersten Füllvolumen und ein Behälter eines zweiten Typs mit einem vorgegebenen zweiten Füllvolumen ist, wobei sich das erste Füllvolumen von dem zweiten Füllvolumen unterscheidet, wobei die Vorrichtung (100) ein drittes Messsystem (630) zum Identifizieren des Typs des Behälters (800) in dem Austragssystem (500) umfasst, wobei die Vorrichtung (100) dazu eingerichtet ist, vor Schritt a) den Typ des Behälters (800) mittels des dritten Messsystems (630) zu identifizieren und die Schritte a)-g) auf der Grundlage des Füllvolumens des ersten Füllvolumens und des zweiten Füllvolumens gemäß dem identifizierten Typ des Behälters (800) durchzuführen.

9. Vorrichtung (100) nach Anspruch 8, wobei zumindest in Kombination mit Anspruch 3 der erste Typ des Behälters (800) ein vorgegebenes erstes Gewicht aufweist, wobei der zweite Typ des Behälters (800) ein vorgegebenes zweites Gewicht aufweist, wobei sich das erste Gewicht von dem zweiten Gewicht unterscheidet, wobei das dritte Messsystem (630) den Gewichtssensor zum Messen des Gewichts des Behälters (800) in dem Austragssystem (500) umfasst, wobei die Vorrichtung (100) dazu eingerichtet ist, vor Schritt a) das Gewicht des Behälters (800) mittels des Gewichtssensors zu messen und den Typ des Behälters (800) zu identifizieren als Behälter des ersten Typs und des zweiten Typs, wenn das gemessene Gewicht des Behälters (800) mit dem ersten Gewicht bzw. mit dem zweiten Gewicht übereinstimmt.

10. Vorrichtung (100) nach Anspruch 8 oder 9, wobei zumindest in Kombination mit Anspruch 5 der erste Typ des Behälters (800) eine vorgegebene erste Höhe aufweist, wobei der zweite Typ des Behälters (800) eine vorgegebene zweite Höhe aufweist, wobei sich die erste Höhe von der zweiten Höhe unterscheidet, wobei das dritte Messsystem (630) den Höhenmesssensor zum Messen der Höhe des Behälters (800) in dem Austragssystem (500) umfasst, wobei die Vorrichtung (100) dazu eingerichtet ist, vor Schritt a) die Höhe des Behälters (800) mittels des Höhenmesssensors zu messen und den Typ des Behälters (800) als Behälter des ersten Typs und des zweiten Typs zu identifizieren, wenn die gemessene Höhe des Behälters (800) mit der ersten Höhe bzw. mit der zweiten Höhe übereinstimmt.

11. Vorrichtung (100) nach einem der Ansprüche 1 - 10, wobei das Fördersystem (100) an einer aufrechten Wand (210) des Vorratsbehälters (200) montiert ist, wobei sich das Fördersystem (400) von einer Bodenwand (220) des Vorratsbehälters (200) nach oben aus dem Vorratsbehälter (200) heraus erstreckt, wobei das Fördersystem (400) angeordnet ist zum Transportieren der Früchte nach oben aus dem Vorratsbehälter (200).

12. Vorrichtung (100) nach Anspruch 11 wobei die Bodenwand (220) des Vorratsbehälters (200) eine V-Form aufweist, die sich nach unten in Richtung auf das Fördersystem (400) neigt.

13. Vorrichtung (100) nach Anspruch 11 oder 12, wobei das Fördersystem (400) ein Förderband (410) umfasst, das mit aufeinanderfolgenden, regelmäßig voneinander beabstandeten Tragplattformen (420) für die Früchte versehen ist, wobei sich die Tragplattformen (420) an einer Vorderseite (411) des Förderbands (410) dem Vorratsbehälter (200) zugewandt durch eine spezielle erste Öffnung (223) in der Bodenwand (220) des Vorratsbehälters (200) nach oben bewegen und wobei sich die Tragplattformen (420) an einer Rückseite (412) des Förderbands (410) dem Vorratsbehälter (200) abgewandt zur ersten Öffnung (223) in der Bodenwand (220) des Vorratsbehälters (200) zurückbewegen.

14. Vorrichtung (100) nach einem der Ansprüche 11 - 13, wobei ein auf und ab bewegbares Rührwerk (230) durch die Bodenwand (220) des Vorratsbehälters (200) hindurch angeordnet ist.

15. Verfahren zum Auspressen von Fruchtsaft mittels der Vorrichtung (100) gemäß einem der Ansprüche 1 - 14, wobei das Verfahren, nachdem der Behälter (800) in dem Austragssystem (500) platziert wurde, die Schritte umfasst:
a) Berechnen eines benötigten Gewichts an Früchten auf der Grundlage des durchschnittlichen Saftertrags und des Füllvolumens des Behälters (800);
b) Transportieren der Früchte mittels des Fördersystems (400) aus dem Vorratsbehälter (200) zu dem Auspresssystem (300) zum Auspressen der Früchte in dem Auspresssystem (300);
c) Wiegen der Früchte mittels des ersten Messsystems (610) vor dem Zuführen der Früchte aus dem Vorratsbehälter (200) zu dem Auspresssystem (300);
d) Stoppen des Fördersystems (400), sobald das benötigte Gewicht an Früchten in das Auspresssystem (300) aufgegeben wurde;
e) Bestimmen des Auspressvolumens des Safts mittels des zweiten Messsystems (620);
f) in dem Fall, dass das Auspressvolumen des Safts das Füllvolumen des Behälters (800) erreicht, Stoppen von zumindest einem des Auspresssystems (300) und des Austragssystems (500);
g) in dem Fall, dass das Auspressvolumen des Safts das Füllvolumen des Behälters (800) nicht erreicht, Wiederholen der Schritte a)-g) auf der Grundlage des restlichen Füllvolumens des Behälters (800), welches die Differenz zwischen dem Füllvolumen des Behälters (800) und dem Auspressvolumen des Safts ist.

## Revendications

1. Dispositif (100) pour presser le jus de fruits, ledit dispositif (100) comprenant:
un réservoir (200) pour les fruits;
un système de pressage (300) pour extraire le jus des fruits;
un système de convoyage (400) pour transporter les fruits du réservoir (200) vers le système de pressage (300);
un système de décharge (500) pour décharger le jus de fruits du système de pressage (300) dans un récipient (800) ayant un volume de remplissage prédéfini, le système de décharge (500) étant conçu pour permettre à un utilisateur d'insérer/de retirer le récipient (800) dans/du système de décharge (500);
**caractérisé en ce que** le dispositif comprend en outre:
un premier système de mesure (610) pour peser les fruits avant leur transfert du réservoir (200) vers le système de pressage (300);
un deuxième système de mesure (620) pour déterminer un volume de jus pressé;
le dispositif (100) étant conçu pour effectuer les étapes suivantes après l'insertion du récipient (800) dans le système de décharge (500):
a) calculer une quantité requise de fruits sur la base d'un rendement moyen en jus prédéfini et du volume de remplissage du récipient (800), le rendement moyen en jus étant un volume moyen de jus par unité de poids des fruits;
b) transporter les fruits à travers un système de convoyage (400) depuis le réservoir (200) vers le système de pressage (300) afin de presser les fruits dans le système de pressage (300);
c) peser les fruits à l'aide du premier système de mesure (610) avant de les acheminer du réservoir (200) vers le système de pressage (300);
d) arrêter le système de convoyage (400) dès que le poids requis de fruits a été introduit dans le système de pressage (300);
e) détermination du volume de jus pressé à l'aide du deuxième système de mesure (620);
f) dans le cas où le volume de jus pressé atteint le volume de remplissage du récipient (800), arrêt d'au moins l'un des systèmes de pressage (300) et de décharge (500);
g) dans le cas où le volume de jus pressé n'atteint pas le volume de remplissage du récipient (800), répéter les étapes a) à g) en fonction du volume de remplissage restant du récipient (800), qui correspond à la différence entre le volume de remplissage du récipient (800) et le volume de jus pressé.

2. Dispositif (100) selon la revendication 1, dans lequel le dispositif (100) est en outre conçu, à l'étape g), pour répéter les étapes a) à g) sur la base du volume de remplissage restant du récipient (800) et d'un rendement réel en jus, le rendement réel en jus étant le rapport entre le volume de jus pressé et le poids de fruits nécessaire.

3. Dispositif (100) selon la revendication 1 ou 2, dans lequel le dispositif (100) comprend un capteur de poids pour mesurer le poids du récipient (800) dans le système de décharge (500).

4. Dispositif (100) selon la revendication 3, dans lequel le deuxième système de mesure (620) comprend le capteur de poids, le dispositif (100) étant conçu pour mesurer, avant l'étape a), le poids propre du récipient (800) à l'aide du capteur de poids et, à l'étape e), le poids total du récipient (800) avec le jus de fruit pressé qu'il contient à l'aide du capteur de poids et de déterminer le volume de jus pressé sur la base du poids net du jus de fruit pressé.

5. Dispositif (100) selon l'une quelconque des revendications 1 - 4, dans lequel le dispositif comprend un capteur de mesure de hauteur pour mesurer la hauteur du récipient (800) dans le système de décharge (500).

6. Dispositif (100) selon l'une quelconque des revendications 1 - 5, dans lequel, au moins en combinaison avec la revendication 3, le récipient (800) a un poids prédéfini et dans lequel le dispositif (100) est conçu pour mesurer le poids du récipient (800) à l'aide du capteur de poids et à ne démarrer l'étape a) que si le poids mesuré du récipient (800) correspond au poids prédéfini du récipient (800), et/ou dans lequel, au moins en combinaison avec la revendication 5, le récipient (800) présente une hauteur prédéfinie et le dispositif (100) est conçu pour mesurer, avant l'étape a), la hauteur du récipient (800) à l'aide du capteur de hauteur et pour ne démarrer l'étape a) que si la hauteur mesurée du récipient (800) correspond à la hauteur prédéfinie du récipient (800).

7. Dispositif (100) selon la revendication 6, dans lequel le système de décharge (500) comprend un évidement (501) pour y placer le récipient (800) et un clapet pour ouvrir et fermer l'évidement (501), le dispositif (100) étant conçu pour fermer l'évidement avant l'étape a) si le poids et/ou la hauteur mesurés du récipient (800) correspondent, le cas échéant, au poids et/ou à la hauteur prédéfinis du récipient (800).

8. Dispositif (100) selon l'une quelconque des revendications 1 - 7, dans lequel le récipient (800) est un récipient d'un premier type ayant un premier volume de remplissage prédéfini et un récipient d'un deuxième type ayant un deuxième volume de remplissage prédéfini, le premier volume de remplissage étant différent du deuxième volume de remplissage, le dispositif (100) comprenant un troisième système de mesure (630) pour identifier le type du récipient (800) dans le système de décharge (500), le dispositif (100) étant conçu pour identifier, avant l'étape a), le type du récipient (800) au moyen du troisième système de mesure (630) et d'effectuer les étapes a) à g) sur la base du volume de remplissage du premier volume de remplissage et du deuxième volume de remplissage conformément au type identifié du récipient (800).

9. Dispositif (100) selon la revendication 8, dans lequel, au moins en combinaison avec la revendication 3, le premier type de récipient (800) a un premier poids prédéfini, le deuxième type de récipient (800) ayant un deuxième poids prédéterminé, le premier poids étant différent du deuxième poids, le troisième système de mesure (630) comprenant le capteur de poids pour mesurer le poids du récipient (800) dans le système de décharge (500), le dispositif (100) étant agencé pour mesurer le poids du récipient (800) à l'aide du capteur de poids et d'identifier le type de récipient (800) comme étant un récipient du premier type et du deuxième type lorsque le poids mesuré du récipient (800) correspond respectivement au premier poids et au deuxième poids.

10. Dispositif (100) selon la revendication 8 ou 9, dans lequel, au moins en combinaison avec la revendication 5, le premier type de récipient (800) présente une première hauteur prédéfinie, le deuxième type de récipient (800) présente une deuxième hauteur prédéfinie, la première hauteur étant différente de la deuxième hauteur, le troisième système de mesure (630) comprenant le capteur de mesure de hauteur pour mesurer la hauteur du récipient (800) dans le système de décharge (500), le dispositif (100) étant conçu pour mesurer la hauteur du récipient (800) à l'aide du capteur de mesure de hauteur et d'identifier le type du récipient (800) comme étant un récipient du premier type et du deuxième type lorsque la hauteur mesurée du récipient (800) correspond respectivement à la première hauteur et à la deuxième hauteur.

11. Dispositif (100) selon l'une quelconque des revendications 1 à 10, dans lequel le système de convoyage (400) est monté sur une paroi verticale (210) du réservoir (200), le système de convoyage (400) s'étendant vers le haut à partir d'une paroi de fond (220) du réservoir (200) vers le haut hors du réservoir (200), le système de convoyage (400) étant agencé pour transporter les fruits vers le haut hors du réservoir (200).

12. Dispositif (100) selon la revendication 11, dans lequel la paroi inférieure (220) du réservoir (200) présente une forme en V qui s'incline vers le bas en direction du système de convoyage (400).

13. Dispositif (100) selon la revendication 11 ou 12, dans lequel le système de convoyage (400) comprend une bande transporteuse (410) qui est pourvue de plates-formes de support (420) successives, régulièrement espacées les unes des autres, pour les fruits, les plateformes de support (420) se déplaçant vers le haut au niveau d'une face avant (411) de la bande transporteuse (410) tournée vers le réservoir (200) à travers une première ouverture spécifique (223) dans la paroi de fond (220) du réservoir (200), et les plateformes de support (420) se déplaçant vers l'arrière sur un côté arrière (412) de la bande transporteuse (410) détournée du réservoir (200) vers la première ouverture (223) dans la paroi de fond (220) du réservoir (200).

14. Dispositif (100) selon l'une quelconque des revendications 11 à 13, dans lequel un agitateur mobile vers le haut et vers le bas (230) est disposé à travers la paroi inférieure (220) du réservoir (200).

15. Procédé d'extraction de jus de fruits à l'aide du dispositif (100) selon l'une quelconque des revendications 1 à 14, le procédé comprenant, après que le récipient (800) a été placé dans le système de décharge (500), les étapes suivantes:
a) calculer un poids de fruits requis sur la base du rendement moyen en jus et du volume de remplissage du récipient (800);
b) transporter les fruits à l'aide du système de convoyage (400) depuis le récipient (200) vers le système de pressage (300) afin de presser les fruits dans le système de pressage (300);
c) peser les fruits à l'aide du premier système de mesure (610) avant de les acheminer du réservoir (200) vers le système de pressage (300);
d) arrêter le système de convoyage (400) dès que le poids requis de fruits a été introduit dans le système de pressage (300);
e) détermination du volume de jus pressé à l'aide du deuxième système de mesure (620);
f) dans le cas où le volume de jus pressé atteint le volume de remplissage du récipient (800), arrêt d'au moins l'un des systèmes de pressage (300) et de décharge (500);
g) dans le cas où le volume de jus pressé n'atteint pas le volume de remplissage du récipient (800), répéter les étapes a) à g) en fonction du volume de remplissage restant du récipient (800), qui correspond à la différence entre le volume de remplissage du récipient (800) et le volume de jus pressé.
